# EUROPÄISCHE PATENTANMELDUNG

(11) **EP 4 510 658 A1**
(43) Date of publication of application: **19.02.2025**
(21) Application number: 24189500.2
(22) Date of filing: 18.07.2024
(51) Int. Cl.: H04W 8/18

(54) **SWITCHING CONNECTIVITY BASED UPON SECOND MOBILE RADIO NETWORK**

(30) Priority: 14.08.2023 IN 202321054571
(71) Applicant: Giesecke+Devrient Mobile Security Germany GmbH, 81677 München (DE)
(72) Inventor: Mishra, Santosh Kumar, 110 020 New Delhi (IN)
(74) Representative: Giesecke+Devrient IP

(57) **Abstract**

A method, in a SIM hosted in a mobile radio communication device, for switching connectivity between first mobile radio network and a second mobile radio network, characterized in that:
- a first ADFUSIM entry and a second ADFUSIM entry are included in the same profile;
- the switch of connectivity from the first to the second mobile radio network is performed by switching a configuration of the profile from using the first ADFUSIM entry and to using the second ADFUSIM entry.

## Description

### Field of the invention

The present invention relates to method, in a SIM hosted in a mobile radio communication device, for switching connectivity between a first mobile radio network and a second mobile radio network.

### Background of the invention and prior art

Mobile radio devices are broadly known and used by consumers particularly in the form of smartphones and tablet PCs or notebooks having a mobile radio interface.

A mobile radio device comprises a chipset, at least one radio interface for the mobile radio network, and at least one profile by which the mobile radio device authenticates itself for being provided with services in a radio network of a mobile network operator.

Profiles are contained in a mobile radio device within a subscriber identity module, SIM, which is a security enclave for profiles of the mobile radio device. SIMs for profiles are presently in the market in the form of removable plug-in SIM cards, pSIMs, or UICCs (UICC = Universal Integrated Circuit Card), and in the form of fixedly soldered-in eSIMs or eUICCs (embedded SIMs, embedded UICCs), and in the form of integrated SIMs, iSIMs or iUICCs, integrated in a chip of the chipset of the mobile radio device.

According to GSMA specification [1] SGP.22 RSP Technical Specification Version 3.0, 19 October 2022 (or briefly SGP.22), and previous versions, a profile is "a combination of data and applications to be provisioned on an eUICC for the purpose of providing services" (1.5 Definition of terms). This definition more or less holds for any profile, also independently of SGP.22, and also for other form factors of a security enclave than the eUICC, such as the plug-in SIM card or UICC.

The provisioning of a profile as described in [1] SGP.22, chapter 3.1, and as shown in Fig. 1 of this document, implies steps of (i) Initialization (chapter 3.1.1), (ii) mutual authentication between SM-DP+ and eUICC (chapter 3.1.2) and (iii) Profile Download an Installation (chapter 3.1.3).

According to [1] SGP.22, chapter 2.4.5 "Profile", a Profile consists of Profile Components:
- One MNO-SD
- Supplementary Security Domains (SSD) and a CASD
- Applets
- Applications, e.g., NFC applications
- NAAs (Network Access Applications)
- Other elements of the File System
- Profile Metadata, including Profile Policy Rules.

Particularly, a profile includes as one element of the profile, a subscriber identifier. A 4G profile for a 4G mobile radio network (4^{th} generation mobile radio network), includes, as the subscriber identifier, an international mobile subscriber identity IMSI. A 5G profile for a 5G mobile radio network (5^{th} generation mobile radio network), includes, as the subscriber identifier, a subscriber permanent identifier SUPI.

Further profile elements are an authentication key and an OTA key or a set of OTA keys.

Each profile is owned by a Mobile Network Operator, MNO, and dedicated to a particular mobile radio network associated to the MNO. For different networks of different MNOs, in general different profiles are provided. A SIM can host several profiles of several MNOs.

Document [2] [TS31.102] ETSI TS 131102 V17.5.0, Universal Mobile Telecommunications System (UMTS); LTE; 5G; Characteristics of the Universal Subscriber Identity Module (USIM) application (3GPP TS 31.102 version 17.5.0 Release 17), 2022-04, from the prior art describes SIMs (referred to as UISMs in [2]) and characteristics of the SIM's file structure hosting profile elements.

The subscriber identifier is stored in a file ADFUSIM in the file system of the SIM.

According to [2] [TS31.102], Annex N, for 5G mobile radio networks, IMSI-type and non-IMSI type SUPls are known. An IMSI-type SUPI is in general dedicated to a public mobile radio network. A non-IMSI-type SUPI is in general dedicated to a private mobile radio network.

A 5G network use case is the switch of connectivity between a public mobile radio network and a private mobile radio network. In a private mobile radio network, the network owner, for example a company, can establish tailored security and pricing architectures which are more suited to the owner than the security and pricing architectures of a public mobile radio network. While a mobile radio device is under coverage of the private radio network, a non-IMSI-type profile including a non-IMSI-type SUPI dedicated to the private radio network is used. Only when the mobile radio device leaves the coverage of the private radio network, network connectivity is switched over to the IMSI-type profile including the IMSI-type SUPI for the public mobile radio network.

In SIMs considered in [2], Annex N.2, a SIM enabling connectivity in both a public IMSI-type mobile radio network and a private non-IMSI-type mobile radio network is expected to include two full profiles in parallel, namely one public profile including in its file system an IMSI-type SUPI, and one private profile including in its file system a non-IMSI-type SUPI. Particularly, [2], Annex N.2, explicitly assumes that both SIMs contain all mandatory EFs of the respective USIM application. Therefore, having a public IMSI-type profile and a non-IMSI-type private profile in one SIM involves a high memory consumption.

It would be favorable to have a solution enabling selective connectivity to a private or public mobile radio network with reduced memory consumption.

Document [3] WO2021089533A1 from the prior art by Thales discloses a method for switching values of a set of profile files, including SUPI, of an MNO to new values of an MNO of visited country, and routing an attach requests back to the home MNO network.

Document [4] US10356569B2 from the prior art by Verizon discloses a method including modifying a UICC such that it matches a network to which a device hosting the UICC is connected.

### Objective of the invention

It is an object of the present invention to provide a solution that enables to switch connectivity between a first and second mobile radio network with reduced memory consumption in the SIM. Particularly, it is an object of the present invention to provide a solution that enables to switch connectivity between a first and second mobile radio network reduced memory with consumption in the SIM, wherein one of the first and second mobile radio network is a public IMSI-type network, and the other is a private non-IMSI-type network.

### Summary of the invention

The object of the invention is achieved by a method with following features, according to claim 1. Embodiments of the invention are presented in dependent claims.

In greater detail, the object of the invention is achieved by a method, in a SIM hosted in a mobile radio communication device, for switching connectivity between first mobile radio network and a second mobile radio network, the method comprising the steps:
(1) operate the SIM in connectivity in the first mobile radio network, making use of a profile hosted in the SIM, the profile including a first ADFUSIM file entry corresponding to the first mobile radio network,
(2) switch connectivity to operate the SIM in connectivity in the second mobile radio network, making use of a profile hosted in the SIM, the profile including a second ADFUSIM file entry corresponding to the second mobile radio network.

The method is characterized in that:
- the first ADFUSIM entry and the second ADFUSIM entry are included in the same profile;
- the switch of connectivity from the first to the second mobile radio network is performed by switching a configuration of the profile from using the first ADFUSIM entry and to using the second ADFUSIM entry.

The ADFUSIM entry can be for example an identifier of the ADFUSIM application, particularly an AID of the ADFUSIM application, particularly a unique AID of the respective ADFUSIM application.

The profile including the first ADFUSIM entry and the second ADFUSIM entry effects that virtually two profiles are included in one single profile, without the entire overhead of a profile having to be provided twice. Particularly, generic files of the profile can be shared between the first and second ADFUSIM entry.

Accordingly, the present invention provides a solution that enables to switch connectivity between a first and second mobile radio network with reduced memory consumption in the SIM.

According to some embodiments of the invention, the switching a configuration of the profile from using the first ADFUSIM entry to using the second ADFUSIM entry is performed by the following switch schedule:
- for execution of step (1) operate the SIM in connectivity in the first mobile radio network, provide in an Elementary File Directory, EFDIR, provided in the SIM, an identifier entry, particularly AID, of the first ADFUSIM;
- for execution of step (2) switch connectivity to operate the SIM in connectivity in the second mobile radio network, remove the identifier entry, particularly AID, of the first ADFUSIM from the Elementary File Directory, EFDIR, and enter into the Elementary File Directory, EFDIR, an identifier entry, particularly AID, of the second ADFUSIM.

In other words, before the connectivity switch, an identifier (AID) of the ADFUSIM application for the first mobile radio network is registered in the EFDIR, whereas to effect the connectivity switch, the identifier (AID) of the ADFUSIM application for the first mobile radio network is replaced, in the EFDIR, with an identifier (AID) of the ADFUSIM application for the second mobile radio network. According to the preferred embodiments, connectivity of the SIM from the first to the second mobile radio network is thus effected in a very efficient mode, by amending, in the Elementary File Directory EFDIR, the application identifier (such as AID) of the ADFUSM application from the first to the second mobile radio network.

According to some embodiments of the invention, along with ADFUSIM, all required or desired further profile elements and/or file system entries are switched.

Accordingly, according to some embodiments, along with the switch of the ADFUSIM, a switch of one or several of the following profile elements and/or file system entries is executed:
- an Authentication key;
- an OTA key or OTA key set;
- EFDIR;
- EFAD;
- EFUST;
- EFLastADF;
- EF-SUCI_Calc;
- DF5G/AFSUPI_NAI.

According to some embodiments, the switch of one or several of the following profile elements is executed by one of the following switch schedules:
- provide, in the profile, only a profile element entry of only one ADFUSIM, containing the profile element entry of the first ADFUSIM, and for the switching update or overwrite the profile element entry of the first ADFUSIM with a profile element entry of the second ADFUSIM;
- provide, in the profile, only a profile element entry of only one ADFUSIM, containing a profile element entry of the first ADFUSIM, and for the switching create a profile element entry of the second ADFUSIM as a new profile element entry.

According to some embodiments,
- the deactivating the profile element of the first ADFUSIM is effected by: remove the identifier entry, particularly AID, for profile element of the first ADFUSIM from the Elementary File Directory, EFDIR; and
- the activating of the profile element of the second ADFUSIM is effected by: enter into the Elementary File Directory, EFDIR, an identifier entry, particularly AID, for the profile element of the second ADFUSIM.

According to some embodiments, one of the first and second mobile radio network is a public, IMSI-type mobile radio network, and the other mobile radio network is a private non-IMSI-type mobile radio network.

According to some embodiments, the first mobile radio network is a 4G network, wherein the SIM includes an entry in ADFISIM for the first mobile radio network, and the second mobile radio network is a 5G network, wherein the switch includes the additional step:
- create in the file system of the profile, for the second mobile radio network which is a 5G network, additional files required for SUCI calculation;
- if and/or as required, download to the SIM a SUCI calculation Applet designed for SUCI calculation making use of the additional files required for SUCI calculation.

A profile for a 5G network requires SUCI calculation Applet and some specific files required for SUCI calculation, which are not required with a 4G profile. Accordingly, when switching from a 4G to a 5G connectivity, the missing files have to be created, and the missing Applet must be provided, e.g. downloaded.

According to some embodiments, the additional files required for SUCI calculation are created along with switching the configuration to the second profile.

According to some embodiments, the second mobile radio network is a private mobile radio network.

Particularly, the second mobile radio network can be a 5G private mobile radio network. In this case, the first mobile radio network can be either a 5G or a 4G or 3G network.

According to some embodiments, the first mobile radio network is a 5G network, wherein the SIM includes an entry in EFUST for the first mobile radio network, and the second mobile radio network is a 4G or 3G network, wherein the switch includes the additional step: - disable EFUST of the first mobile network.

EFUST is a file specific to 4G and 3G networks and not required in 5G networks.

According to some embodiments, the switching connectivity between the first mobile radio network and the second mobile radio network is initiated by a trigger event.

The trigger event can be or comprise one or several of the following:
- unavailability of the first mobile radio network at the device;
- user input at a user interface of the device;
- user entry of a machine readable code at the device.

The first trigger event, unavailability of the first mobile radio network at the device, can imply an automatic connectivity switch from the unavailable first mobile radio network to the available second mobile radio network. Alternatively, upon unavailability of the first mobile radio network, in addition user interaction can be provided, for example in selecting the second mobile radio network from several available mobile radio networks.

The second trigger event, user input at a user interface of the device, can be used as single trigger to effect the switch of connectivity, for example to effect a willful switch initiated by the user. Alternatively, the user input can be used as a trigger in combination with unavailability of the first mobile radio network.

The third trigger event, user entry of a machine readable code at the device, preferably is used for a willful switch initiated by the user.

### Brief description of the drawings

Embodiments of the invention will now be described with reference to the accompanying drawings, throughout which like parts are referred to by like references, and in which represents:
- Fig. 1: files on the file system of an IMSI-type and a non-IMSI-type profile, according to the prior art, and a merged profile containing files of both profiles;
- Fig. 2: files on the file system of a profile, according to an embodiment of the invention.

### Detailed description of the invention

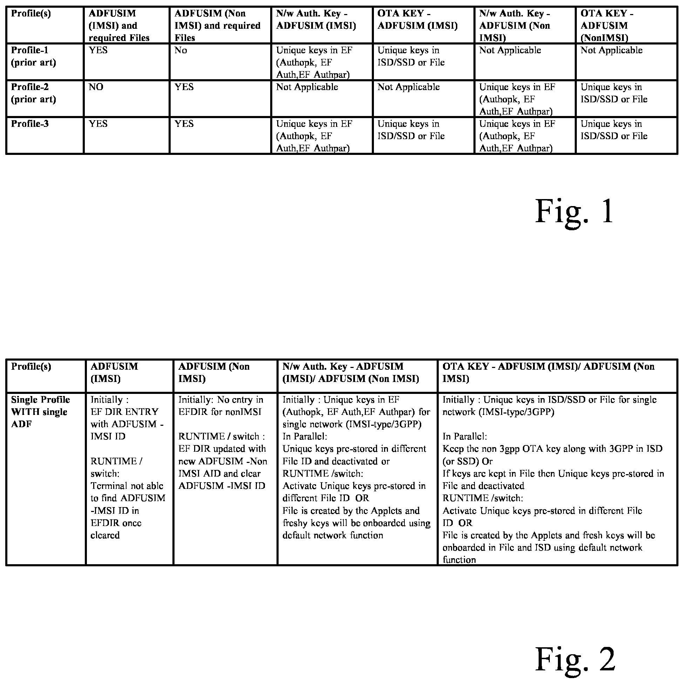

Fig. 1 shows files on the file system of an IMSI-type profile, Profile-1, and a non-IMSI-type profile, Profile-2, according to the prior art, and a merged profile. Profile-3, containing files of both IMSI-type and non-IMSI-type profiles.

In Fig. 1, Profile-1, IMSI-type, has an ADFUSIM entry of IMSI type, and other required files of the profile, and doesn't have an ADFUSIM entry of non-IMSI type and the required files. Further, Profile-1 has an entry of an authentication key of ADFUSIM IMSI-type, which are unique keys in an elementary file EF, particularly Authopk, EF Auth, EF Autpar. Further, Profile-1 has an entry of OTA keys of ADFUSIM IMSI-type, which are unique keys in the Issuer Security Domain ISD or in a Supplementary Security Domain SSD or in a file. Authentication keys and OTA keys of non-IMSI type ADFUSIM are not present in Profile-1.

In Fig. 1, Profile-2, non-IMSI-type, has an ADFUSIM entry of non-IMSI type, and other required files of the profile, and doesn't have an ADFUSIM entry of IMSI type and the required files. Further, Profile-2 has an entry of an authentication key of ADFUSIM non-IMSI-type, which are unique keys in an elementary file EF, particularly Authopk, EF Auth, EF Autpar. Further, Profile-2 has an entry of OTA keys of ADFUSIM non-IMSI-type, which are unique keys in the Issuer Security Domain ISD or in a Supplementary Security Domain SSD or in a file. Authentication keys and OTA keys of IMSI type ADFUSIM are not present in Profile-2.

In Fig. 1, Profile-3, a hypothetical profile has ADFUSIM and required files, Authentication Key and OTA keys for both IMSI-type and non-IMSI-type, and all profile files of IMSI-type and non-IMSI-type provided twice (not all shown in Fig. 1). For example, EDIR can contain both an ADFUSIM entry of IMSI-type and an ADFUSIM entry of non-IMSI type.

Fig. 2 shows files on the file system of a profile, according to an embodiment of the invention.

The profile of Fig. 2 has one single ADFUSIM file into which either and ADFUSIM entry of IMSI-type or an ADFUSIM entry of non-IMSI-type is recorded.

In Fig. 2, initially, the ADFUSIM contains an entry of IMSI-type, and no entry of non-IMSI type. When the terminal dials into a mobile radio network, it dials into the IMSI-type mobile radio network corresponding to the IMSI-type ADFUSIM entry.

At runtime, triggered by a trigger event, the ADFUSIM file is updated and hereby overwritten with an ADFUSIM entry of non-IMSI type.

Accordingly, the terminal is unable to find an ADFUSIM entry of IMSI-type, however can find only an ADFUSIM entry of non-IMSI type.

Accordingly, the terminal will, after the trigger event has occurred and ADFUSM switch has been executed, dial in into the non-IMSI mobile radio network.

Associated with ADFUSIM, also authentication keys can be switched.

Initially, authentication unique keys in of IMSI-type are contained in the elementary files, EF, such as Authopk, EF Auth,EF Authpar, for a single IMSI-type network.

According to a first option for unique keys, in parallel, unique keys of non-IMSI type can be pre-stored in different elementary file, EF, with a different File ID, and be in a deactivated state.

At runtime, also triggered by the trigger event, or otherwise in association with the triggered ADFUSIM switch, the deactivated non-IMSI type unique keys pre-stored in the different EF / File ID are activated.

According to a second option for unique keys, a new key file is created fresh keys are onboarded from a network server to the SIM, which may be executed using default network functions.

Associated with ADFUSIM, also OTA keys can be switched.

Initially, OTA unique keys of IMSI-type are contained in the ISD/SSD or File, for a single IMSI-type network (3GPP).

According to a first option for OTA unique keys, in parallel, OTA unique keys of non-IMSI type can be pre-stored in the ISD or SSD or EF, and be in a deactivated state.

At runtime, also triggered by the trigger event, or otherwise in association with the triggered ADFUSIM switch, the deactivated non-IMSI type OTA unique keys pre-stored in the ISD/SSD/EF are activated.

According to a second option for OTA unique keys, a new key file is created and fresh keys are onboarded from a network server to the SIM, which may be executed using default network functions.

### Cited documents

[1] [SGP.22] RSP Technical Specification Version 3.0, 19 October 2022 (or briefly SGP.22)
[2] [TS31.102] ETSI TS 131 102 V17.5.0, Universal Mobile Telecommunications System (UMTS); LTE; 5G; Characteristics of the Universal Subscriber Identity Module (USIM) application (3GPP TS 31.102 version 17.5.0 Release 17), 2022-04
[3] WO2021089533A1
[4] US10356569B2

## Claims

1. A method, in a SIM hosted in a mobile radio communication device, for switching connectivity between a first mobile radio network and a second mobile radio network, the method comprising the steps:
(1) operate the SIM in connectivity in the first mobile radio network, making use of a profile hosted in the SIM, the profile including a first ADFUSIM file entry corresponding to the first mobile radio network,
(2) switch connectivity to operate the SIM in connectivity in the second mobile radio network, making use of a profile hosted in the SIM, the profile including a second ADFUSIM file entry corresponding to the second mobile radio network,
**characterized in that**:
- the first ADFUSIM entry and the second ADFUSIM entry are included in the same profile;
- the switch of connectivity from the first to the second mobile radio network is performed by switching a configuration of the profile from using the first ADFUSIM entry to using the second ADFUSIM entry.

2. The method according to claim 1, wherein the switch of the configuration of the profile from using the first ADFUSIM entry to using the second ADFUSIM entry is performed by the following switch schedule:
- for execution of step (1) operate the SIM in connectivity in the first mobile radio network, provide in an Elementary File Directory, EFDIR, provided in the SIM, an identifier entry, particularly AID, of the first ADFUSIM;
- for execution of step (2) switch connectivity to operate the SIM in connectivity in the second mobile radio network, remove the identifier entry, particularly AID, of the first ADFUSIM from the Elementary File Directory, EFDIR, and enter into the Elementary File Directory, EFDIR, an identifier entry, particularly AID, of the second ADFUSIM.

3. The method according to claim 1 or 2, wherein along with the switch of the ADFUSIM, a switch of one or several of the following profile elements and/or file system entries is executed:
- an Authentication key;
- an OTA key or OTA key set;
- EFDIR;
- EFAD;
- EFUST;
- EFLastADF;
- EF-SUCI_Calc;
- DF5G/AFSUPI_NAI.

4. The method according to claim 3, wherein the switch of one or several of the following profile elements is executed by one of the following switch schedules:
- provide, in the profile, only a profile element entry of only one ADFUSIM, containing the profile element entry of the first ADFUSIM, and for the switching update or overwrite the profile element entry of the first ADFUSIM with a profile element entry of the second ADFUSIM;
- provide, in the profile, only a profile element entry of only one ADFUSIM, containing a profile element entry of the first ADFUSIM, and for the switching create a profile element entry of the second ADFUSIM as a new profile element entry.

5. The method according to claim 3 or 4, wherein
- the deactivating the profile element of the first ADFUSIM is effected by: remove the identifier entry, particularly AID, for profile element of the first ADFUSIM from the Elementary File Directory, EFDIR; and
- the activating of the profile element of the second ADFUSIM is effected by: enter into the Elementary File Directory, EFDIR, an identifier entry, particularly AID, for the profile element of the second ADFUSIM.

6. The method according to any of claims 1 to 5, wherein one of the first and second mobile radio network is a public, IMSI-type mobile radio network, and the other mobile radio network is a private non-IMSI-type mobile radio network.

7. The method according to any of claims 1 to 6, wherein the first mobile radio network is a 4G network, wherein the SIM includes an entry in ADFISIM for the first mobile radio network, and the second mobile radio network is a 5G network, wherein the switch includes the additional step:
- create in the file system of the profile, for the second mobile radio network which is a 5G network, additional files required for SUCI calculation;
- if and/or as required, download to the SIM a SUCI calculation Applet designed for SUCI calculation making use of the additional files required for SUCI calculation.

8. The method according to claim 7, wherein the additional files required for SUCI calculation are created along with switching the configuration to the second profile.

9. The method according to claim 7 or 8, wherein the second mobile radio network is a private mobile radio network.

10. The method according to any of claims 1 to 6, wherein the first mobile radio network is a 5G network, wherein the SIM includes an entry in EFUST for the first mobile radio network, and the second mobile radio network is a 4G or 3G network, wherein the switch includes the additional step:
- disable EFUST of the first mobile network.

11. The method according any of claims 1 to 10, wherein the switching connectivity between the first mobile radio network and the second mobile radio network is initiated by a trigger event.

12. The method according to claim 11, wherein the trigger event is or comprises one or several of the following:
- unavailability of the first mobile radio network at the device;
- user input at a user interface of the device;
- user entry of a machine readable code at the device.
